# EUROPÄISCHE PATENTSCHRIFT

(11) **EP 3 755 927 B1**
(45) Veröffentlichungstag und Bekanntmachung des Hinweises auf die Patenterteilung: **07.06.2023**
(21) Anmeldenummer: 19706594.9
(22) Anmeldetag: 20.02.2019
(51) Int. Cl.: F16K 3/08, F16K 11/074, F16K 27/04

(54) **KERAMISCHES SCHEIBENVENTIL**
CERAMIC DISC VALVE
SOUPAPE À DISQUE EN CÉRAMIQUE

(30) Priorität: 20.02.2018 DE 202018100921 U
(43) Veröffentlichungstag der Anmeldung: 30.12.2020
(73) Patentinhaber: Klee, Klaus, 27383 Scheessel (DE)
(72) Erfinder: Klee, Klaus, 27383 Scheessel (DE)
(74) Vertreter: Eisenführ Speiser
(86) Internationale Anmeldenummer: PCT/EP2019/054193
(87) Internationale Veröffentlichungsnummer: WO 2019/162315

(56) Entgegenhaltungen:
- EP-A1- 0 015 600
- EP-A1- 2 881 635
- EP-A2- 2 236 878
- CH-A- 334 418
- CN-A- 103 671 990
- CN-A- 104 344 026
- CN-A- 104 728 473
- US-A- 1 722 815
- US-A- 4 901 977
- US-A1- 2012 006 437

## Beschreibung

Die Erfindung betrifft ein Ventil nach Anspruch 1.

Ventile dieser Bauart werden für verschiedene Zwecke genutzt und finden insbesondere Anwendung als Absperrventile oder Regelventile in Sanitärinstallationen in Häusern zur Absperrung von Flüssigkeitsleitungen wie beispielsweise Trinkwasserleitungen oder Heizwasserleitungen.

Ein wesentlicher Vorteil dieser Bauart von Ventilen, die auch Absperrarmatur oder Scheibenventil genannt wird, liegt in der Verwendung von keramischen Scheiben als Ventilkörper und Ventilsitz. Diese keramischen Scheiben sind einerseits verkalkungssicher, andererseits gewährleisten sie einen reibungsarmen Lauf, das heißt die Öffnungs- und Schließbewegung des Ventils kann mit geringer Kraft ausgeführt werden, und auch nach längerer Nichtbewegung des Ventilmechanismus kann die erste Öffnungs- oder Schließbewegung mit einem geringen Losbrechmoment ausgeführt werden.

Absperrventile mit keramischen Ventilscheiben sind aus US 4,674,537 A und US 7,726,338 B2 bereits bekannt. Bei diesen Absperrventilen sind zwei fest im Ventilgehäuse installierte Ventilsitzscheiben vorgesehen, die eine drehbar im Ventilgehäuse gelagerte Ventilkörperscheibe beidseits einfassen. Die Ventilsitzscheiben und die Ventilkörperscheibe weisen exzentrische Bohrungen auf, die für die Öffnungsstellung in Fluchtung zueinander gebracht werden können und für die Schließstellung aus der Fluchtung gebracht werden können. Dies wird durch eine Drehung der Ventilkörperscheibe bewirkt.

Damit weder im geschlossenen noch im geöffneten Zustand Flüssigkeit um die Ventilsitzscheiben und die Ventilkörperscheibe herum vom Einlass zum Auslass einen Weg findet, sind bei diesen vorbekannten Absperrventilen Dichtungsringe vorgesehen, welche die beiden Ventilsitzscheiben gegen das Ventilgehäuse abdichten. Diese Dichtungsringe sind axial zwischen den Ventilsitzscheiben und dem Ventilgehäuse eingespannt. Diese Bauart kann zwar eine Abdichtung bewirken, es hat sich aber gezeigt, dass durch Verkalkungen im Bereich dieser Abdichtungsringe die Dichtungswirkung nachlassen und beeinträchtigt werden kann. Zudem wird durch die notwendige Dichtkraft die Betätigungskraft des Absperrventils erhöht.

Aus DE 20 2016 100 108 U1 ist ein Scheibenventil mit keramischen Scheiben vorbekannt. Dieses Absperrventil weist günstige Eigenschaften hinsichtlich Verschleiß und Verkalkung auf. Die Dichtigkeit wird durch große axial wirkende Dichtungen gewährleistet. Es ist wünschenswert, dieses Scheibenventil hinsichtlich der einander widersprechenden Zielsetzungen einer Langzeitdichtigkeit und Leichtgängigkeit weiter zu verbessern.

Aus DE 20 2016 106 030 ist ein weiteres Scheibenventil vorbekannt. Dieses Scheibenventil weist spezifisch geformte Strömungskörper im Bereich der Ventilscheiben auf, welche den Strömungswiderstand verringern und dadurch die Durchflussrate verbessern. Auch bei diesem Scheibenventil ist es wünschenswert, die einander widersprechenden Zielsetzungen einer Langzeitdichtigkeit und Leichtgängigkeit weiter zu verbessern.

US 2012/0006437 A1 offenbart ein Ventil nach dem Oberbegriff des Anspruchs 1.

Ein weiterer Nachteil dieser vorbekannten Bauart von Absperrventilen mit keramischen Ventilscheiben liegt in der aufwendigen Konstruktion für die Ventilkörperscheibe mit der notwendigen Möglichkeit, ein manuell oder aktuatorisch betätigbares Element außerhalb des Ventilgehäuses mit dem keramischen Bauteil zu koppeln. Diese Kopplung ist aufgrund der äußerlichen Zugänglichkeit häufig ursächlich für Beschädigungen infolge von ungünstigen Krafteinwirkungen bei Fehlbedienung oder Schwergängigkeit des Ventils.

Der Erfindung liegt die Aufgabe zugrunde, ein hinsichtlich dieser Nachteile verbessertes Absperrventil bereitzustellen.

Diese Aufgabe wird erfindungsgemäß mit einem Absperrventil nach Anspruch 1 gelöst.

Erfindungsgemäß wird ein Ventil bereitgestellt, das eine Abdichtung bzw. eine Freigabe eines Durchgangskanals mittels einer Ventilkörperscheibe bewirkt, die relativ zu einer Ventilsitzscheibe beweglich ist. Die Ventilkörperscheibe und die Ventilsitzscheibe sind hierbei keramisch, das heißt aus einer Keramik wie beispielsweise Aluminiumoxid, Zirkonoxid oder einem anderen keramischen Material hergestellt. Hierdurch kann eine hohe Beständigkeit gegenüber Verkalkung der abdichtenden Flächen an der Ventilkörperscheibe und der Ventilsitzscheibe erzielt werden. Es ist zu verstehen, dass die Relativbewegung zwischen Ventilkörperscheibe und Ventilsitzscheibe insbesondere in einer Rotation der Ventilkörperscheibe relativ zur Ventilsitzscheibe bestehen kann, insbesondere kann diese Rotation um eine Längsachse des Durchgangskanals erfolgen, um welche die beiden Scheiben rotationssymmetrisch angeordnet sind. Die Ventilkörperscheibe und die Ventilsitzscheibe liegen hierbei mit axialen Stirnflächen aneinander an und bewirken hierdurch eine Abdichtung relativ zueinander. Eine oder mehrere Öffnungen in der Ventilkörperscheibe können durch die Relativbewegung in Fluchtung zu einer oder mehreren Öffnungen in der Ventilsitzscheibe gebracht werden, wodurch ein Durchlass gewährt wird. In einer relativen Position, in welcher diese Öffnung(en) nicht in Fluchtung zueinander sind, wird der Durchgang entsprechend gesperrt.

Erfindungsgemäß ist die Ventilkörperscheibe mit einem Zahnkranz mechanisch gekoppelt, der seinerseits im Eingriff mit einem Zahnradritzel steht. Grundsätzlich wird hierdurch eine Betätigung der Ventilkörperscheibe durch eine Drehbewegung des Zahnradritzels ermöglicht. Dies erlaubt es, die Ventilkörperscheibe präzise auch um kleine Winkelgrade zu verdrehen.

Der Zahnkranz ist erfindungsgemäß innerhalb des Ventilgehäuses angeordnet. Das Zahnradritzel ist mit einem außerhalb des Ventilgehäuses angeordneten Betätigungselement verbunden. Dies ermöglicht es, dass die notwendige Abdichtung im Bereich der Verbindung zwischen dem Zahnradritzel und dem Betätigungselement angeordnet sein kann. Gegenüber vorbekannten Scheibenventilen kann diese Abdichtung aufgrund dieser Anordnung eine hohe Dichtkraft erzeugen, ohne hierbei die Bewegung der Ventilkörperscheibe nachteilig zu erschweren.

Es ist zu verstehen, dass der Eingriff zwischen Zahnradritzel und Zahnkranz insbesondere im Ventilgehäuse erfolgt und durch das Medium, welches das Ventilgehäuse durchströmt, geschmiert sein kann.

Weiterhin kann die Anzahl der Zähne des Zahnkranzes größer sein als die Anzahl der Zähne des Zahnradritzels, beispielsweise kann der Faktor des Unterschieds größer als 2, 3, 4, 5, oder 10 sein. Hierdurch wird eine Untersetzung der Drehzahl und eine Verstärkung des Drehmoments des Zahnradritzels erreicht, was sich weiterhin positiv auf die präzise Einstellbarkeit der Drosselwirkung und die günstige Balance zwischen Dichtungswirkung und Hemmwirkung der Dichtung auswirkt.

Die Rotationsachse des Zahnradritzels kann parallel, abgewinkelt oder senkrecht zu der Rotationsachse des Zahnkranzes verlaufen. Insbesondere kann also ein Stirnradgetriebe oder ein Kegelradgetriebe zum Einsatz kommen. So ist es beispielsweise bei einer parallelen Lage von Einlass zu Auslassöffnung bzw. einem geraden Durchgangskanal vorteilhaft, wenn eine abgewinkelte oder senkrechte Lage der beiden Rotationsachsen vorgesehen ist, um die Welle des Zahnradritzels gut aus dem Gehäuse herausführen zu können. Bei einem abgewinkelten Strömungskanal kann demgegenüber auch mit einem Stirnradgetriebe oder einer Innenverzahnung am Zahnkranz eine vorteilhafte Anordnung erzielt werden.

Bei einer ersten bevorzugten Ausführungsform des erfindungsgemäßen Absperrventils ist das Betätigungselement außen am Ventilgehäuse angeordnet und mit dem Zahnradritzel mittels einer Ritzelwelle mechanisch verbunden zur Übertragung eines Drehmoments. Bei dieser bevorzugten Ausführungsform ist das Zahnradritzel mit dem Betätigungselement, das außen am Ventilgehäuse angeordnet ist, über eine Ritzelwelle mechanisch gekoppelt. Dies ermöglicht es, eine manuell oder mittels eines Aktuators aufgebrachte Betätigungskraft von außen auf das Zahnradritzel zu übertragen. Das Betätigungselement kann beispielsweise ein Stellrad, Stellhebel oder ein angetriebener Aktuator sein.

Erfindungsgemäß ist das Zahnradritzel innerhalb des Ventilgehäuses angeordnet. Durch diese Anordnung wird einerseits eine Schmierung der Getriebeübertragung durch das Medium im Ventilgehäuse erreicht, andererseits kann die Welle des Zahnradritzels durch das Ventilgehäuse geführt und abgedichtet werden, was aufgrund einer möglichen Untersetzung zu einer guten Abdichtung und geringen, durch die Abdichtung hervorgerufenen Reibmomenten führt.

Weiterhin bevorzugt ist eine Dichtung, welche die Ritzelwelle gegenüber dem Gehäuse abdichtet, vorgesehen. Diese Dichtung kann beispielsweise als Radialdichtung oder als Axialdichtung ausgeführt sein. So kann beispielsweise ein Radialwellendichtring eingesetzt werden.

Das erfindungsgemäße Ventil ist weiterhin fortgebildet durch eine zweite Ein- oder Auslassöffnung, von der sich ein zweiter Durchgangskanal erstreckt, eine zweite Ventilanordnung mit einer zweiten keramischen Ventilkörperscheibe mit zumindest einer Ventilkörperöffnung, die relativ zu einer zweiten keramischen Ventilsitzscheibe mit zumindest einer Ventilsitzöffnung beweglich ist und in einer ersten Relativposition der zweiten Ventilkörperscheibe zur zweiten Ventilsitzscheibe eine Fluidverbindung zwischen dem zweiten Durchgangskanal und dem Durchgangskanal sperrt und in einer zweiten Relativposition der zweiten Ventilkörperscheibe zur zweiten Ventilsitzscheibe die Fluidverbindung zwischen dem zweiten Durchgangskanal und dem Durchgangskanal freigibt, wobei die zweite Ventilkörperscheibe mit einem zweiten Zahnkranz mechanisch gekoppelt ist, der mit dem Zahnradritzel zur Übertragung eines Drehmoments von dem Zahnradritzel auf den zweiten Zahnkranz und die zweite Ventilkörperscheibe im Eingriff steht und der zweite Zahnkranz innerhalb des Ventilgehäuses angeordnet ist. Mit dieser erfindungsgemäßen Ausbildungsform wird eine Anwendung des Ventils als Zonenventil oder Mischerventil ermöglicht, um beispielsweise aus getrennter Heiß- und Kaltwasserzufuhr eine Mischung von Warmwasser zu steuern oder zu regeln. Das Ventil verfügt hierzu über zwei Einlässe, deren Zulauf zu einem Auslass durch zwei getrennte Ventilanordnungen geregelt wird. Die zwei getrennten Ventilanordnungen werden dabei simultan durch das Zahnradritzel betätigt. Diese simultane Betätigung erlaubt die Benutzung eines einzigen Betätigungsmittels, um die Verstellung zu bewirken.

Grundsätzlich sind verschiedene Anwendungen möglich. Beispielsweise können die beiden Ventilanordnungen synchron in gleicher Richtung öffnen oder schließen, sodass eine synchrone Steuerung der Mengenzufuhr aus den beiden Einlässen oder eine synchrone Steuerung der Verteilung eines Zuflusses aus einem Einlass auf zwei Auslässe erfolgt.

Insbesondere kann vorgesehen sein, dass die zweite Ventilanordnung geschlossen ist, wenn die Ventilanordnung geöffnet ist und die zweite Ventilanordnung geöffnet ist, wenn die Ventilanordnung geschlossen ist. In diesem Fall erfolgt eine synchrone Verstellung der beiden Ventilanordnungen in entgegengesetzter Richtung. Das Ventil gewährleistet hierdurch stets einen gleichbleibenden Durchflussquerschnitt zwischen zwei Einlassöffnungen und einer Auslassöffnung oder zwischen einer Einlassöffnung und zwei Auslassöffnungen, verändert aber jeweils invers die Zuflussmengen aus den beiden Einlassöffnungen oder die Abflussmengen in die beiden Auslassöffnungen.

Erfindungsgemäß ist vorgesehen, dass das Ventilgehäuse eine abgewinkelte Form hat, die Einlassöffnung eine Längsdurchströmungsrichtung hat, die abgewinkelt zu einer Längsdurchströmungsrichtung der Auslassöffnung steht und dass die Ventilkörperscheibe mit einer koaxial zur Längsdurchströmungsrichtung der Einlassöffnung oder der Auslassöffnung verlaufenden Stellwelle gekoppelt ist, die sich abgedichtet entlang der Längsdurchströmungsrichtung der Einlassöffnung oder der Auslassöffnung durch das Ventilgehäuse nach außen erstreckt und außerhalb des Ventilgehäuses mit einem Betätigungselement gekoppelt ist.

Gemäß dieser Fortbildung bzw. diesem Aspekt der Erfindung ist eine abgewinkelte Gehäusetorm vorgesehen, die in Verbindung mit dem Zahnradantrieb vorteilhaft ist. Hierbei kann eine Antriebswelle, die eine reziprok schwenkende oder kontinuierlich rotierende Bewegung ausführen kann, direkt mit der Ventilkörperscheibe gekoppelt sein und aus dem Ventilgehäuse herausgeführt sein.

Gemäß einer weiteren bevorzugten Ausführungsform oder gemäß einer alternativen Fortbildung des eingangs genannten Sperrventils ist vorgesehen, dass das Ventilgehäuse zweiteilig ist und an einem ersten Gehäuseabschnitt die Einlassöffnung, die Auslassöffnung, die Ventilkörperscheibe und die Ventilsitzscheibe angeordnet sind, an einem zweiten, von dem ersten Gehäuseabschnitt beabstandeten Gehäuseabschnitt ein Betätigungselement angeordnet ist, und die Ventilkörperscheibe mit einer koaxial zu einer Längsdurchströmungsrichtung der Einlassöffnung oder der Auslassöffnung verlaufenden Stellwelle gekoppelt ist, die sich durch die Einlassöffnung oder die Auslassöffnung hindurch zu dem zweiten Gehäuseabschnitt erstreckt und sich abgedichtet durch den zweiten Gehäuseabschnitt nach außen erstreckt und außerhalb des zweiten Gehäuseabschnitts mit dem Betätigungselement gekoppelt ist.

Gemäß dieser Ausführungsform wird ein Sperrventil bereitgestellt, das einen erleichterten Einbau in ein fluidführendes Rohr ermöglicht und folglich einen sperrbaren oder drosselbaren Abgang aus einem solchen Rohr erlaubt. Hierzu können die beiden Gehäuseabschnitte an einander radial gegenüberliegenden Abschnitten des Rohres in dortige Öffnungen eingesetzt werden und im Bereich des Gehäuseabschnitts, in dem Ventilkörperscheibe und ventilsitzscheibe angeordnet sind, der Abgang durch die Auslassöffnung erfolgen. Die Einlassöffnung kommuniziert hierbei mit dem Innenraum des Rohres.

Dabei ist es besonders bevorzugt, wenn der erste Gehäuseabschnitt in eine erste Öffnung in einem ersten Wandabschnitt eines Verteilerrohres abgedichtet eingesetzt ist und der zweite Gehäuseabschnitt in eine zweite Öffnung in einem zweiten, dem ersten Wandabschnitt gegenüberliegendem Wandabschnitt eines Verteilerrohres abgedichtet eingesetzt ist und sich die Längsachse des Verteilerrohrs abgewinkelt zu der Längsdurchströmungsrichtung der Einlassöffnung oder der Auslassöffnung erstreckt. Diese Bauweise ermöglicht einen effizienten und platzsparenden Einbau und erlaubt die Anordnung mehrerer Sperrventile an einem Rohr in einer versetzten Anordnung zueinander. So kann beispielsweise ein Heizkreisverteiler mit den erfindungsgemäßen Sperrventilen ausgerüstet werden.

Grundsätzlich ist zu verstehen, dass das erfindungsgemäße Sperrventil als reines Sperrventil eingesetzt werden kann, aber auch als dosierbares Sperrventil, das auch Drosselfunktionen erfüllt. Die exakte und leichte Verstellbarkeit ermöglicht es, die Drosselwirkung exakt zu dosieren.

Es ist besonders bevorzugt, wenn die zumindest eine Ventilkörperöffnung und/oder die zumindest eine Ventilsitzöffnung eine dreieckige Kontur aufweisen. Durch eine solche dreieckige Kontur, die auch als verrundetes Dreieck ausgeführt sein kann, ist eine effiziente Ausnutzung des an der Ventilkörperscheibe und der Ventilsitzscheibe zur Verfügung stehenden Raumes möglich und eine gute Dosierbarkeit der Durchflussrate gegeben.

Weiterhin ist es bevorzugt, wenn das Betätigungselement ein elektrischer Schrittmotor ist.

Durch einen solchen Schrittmotor, der als Servomotor oder Stepperantrieb ausgeführt sein kann, wird eine effiziente und präzise Betätigung der Verstellbewegung erreicht und eine automatisierte oder ferngesteuerte Ventilbetätigung ermöglicht. Insbesondere in Verbindung mit der Ausführung mit Zahnkranz und Zahnradritzel kann durch die dabei ermöglichte Untersetzung eine präzise und schnelle Ventilverstellung realisiert werden, ohne hierbei eine große Dimensionierung des Antriebs vorsehen zu müssen.

Gemäß einer weiteren bevorzugten Ausführungsform ist vorgesehen, dass die Ventilkörperscheibe und die Ventilsitzscheibe je zwei um 180° zueinander versetzte axiale Durchlässe aufweisen und dass die Ventilkörperscheibe zwischen der ersten und der zweiten Relativposition um 90° verschwenkbar ist. Bei dieser Ausführungsform wird ein besonders effizienter und verlustarmer Durchsatz des Fluids wie beispielsweise der Flüssigkeit durch das erfindungsgemäße Absperrventil erzielt, indem in der Offenstellung zwei fluchtende Durchlässe durch Ventilkörperscheibe und Ventilsitzscheibe die Flüssigkeit durchleiten. Zugleich wird ein geringer Betätigungswinkel von lediglich 90° erzielt, der eine schnelle Betätigung von der Offenstellung in die Schließstellung und umgekehrt ermöglicht.

Erfindungsgemäß ist vorgesehen, dass die Ventilkörperscheibe um eine Drehachse rotierbar gelagert ist, die parallel, vorzugsweise koaxial zu einer Längsachse des Durchgangskanals liegt. Bei dieser Ausführungsform ist die Ventilkörperscheibe drehbar gelagert, und die Achse, um welche diese Drehbewegung stattfindet, ist parallel, insbesondere koaxial zu der Längsachse des Durchgangskanals. Die Rotationsbewegung kann reziprok oder Kontinuierlich sein. Der Durchgangskanal kann bei dieser Ausführungsform insbesondere einen kreisförmigen Querschnitt aufweisen, um die Ventilkörperscheibe koaxial aufzunehmen. Es ist zu verstehen, dass weiterhin vorzugsweise die Ventilsitzscheibe rotationssymmetrisch um diese Längsachse des Durchgangskanals angeordnet ist.

Gemäß einer weiteren bevorzugten Ausführungsform ist vorgesehen, dass die Ventilsitzscheibe mittels eines Ventilsitzdichtungselementes gegen das Ventilgehäuse abgedichtet ist, wobei das Ventilsitzdichtungselement vorzugsweise axial zwischen der Ventilsitzscheibe und dem Ventilgehäuse eingespannt ist und weiter vorzugsweise ein Profildichtungselement aus einem elastomeren Material umfasst, das durch einen integrierten Stützring stabilisiert ist. Bei dieser Ausführungsform ist die Ventilsitzscheibe im Ventilgehäuse abgedichtet angeordnet, um eine zuverlässige Abdichtung in der Geschlossenstellung zu bewirken. Diese Abdichtung kann vorzugsweise durch ein Dichtungselement mit Stützring erfolgen. Bei einem solchen Profildichtungselement mit Stützring ist ein elastomeres Material vorgesehen, welches an den Dichtungsflächen anliegt und durch seine elastomeren Eigenschaften eine zuverlässige Anschmiegung und Abdichtung bewirken kann. Insbesondere kann eine solche Dichtung so eingebaut sein, dass die Schenkel der Dichtung durch eine Druckerhöhung im Fluid auseinander gepresst werden und sich die Außenflächen der Dichtrung an die gegeneinander abzudichtenden Flächen mit erhöhter Dichtkraft anlegen. Zur Verhinderung einer zu starken Verformung oder eines Wegdrückens dieses elastomeren Materials aus der Dichtungsposition ist ein Stützring aus einem Material am Profildichtungselement vorhanden, der eine geringere Elastizität als das elastomere Material aufweist und eine Formstabilisierung des Profildichtungselementes bewirkt. Durch die axiale Anordnung des Ventilsitzdichtungselementes zwischen der Ventilsitzscheibe und dem Ventilgehäuse kann die Dichtungskraft, die zwischen Ventilkörperscheibe und Ventilsitzscheibe konstruktiv vorgesehen ist, auch zur Abdichtung zwischen der Ventilsitzscheibe und dem Ventilgehäuse mittels des Ventilsitzdichtungselementes genutzt werden. Dies ist insbesondere deshalb vorteilhaft, da zwischen Ventilsitzscheibe und Ventilgehäuse bevorzugt keine Relativbewegung bei Öffnen und Schlie-βen des Absperrventils stattfindet.

Noch weiter ist es bevorzugt, dass das Ventilgehäuse einen Ventilgehäuseeinlassabschnitt und einen Ventilgehäuseauslassabschnitt umfasst, der lösbar mit dem Ventilgehäuseeinlassabschnitt verbunden ist. Durch eine solche zweiteilige Ausgestaltung des Ventilgehäuses wird einerseits die Montage des Ventilgehäuses mit den darin liegenden Komponenten, insbesondere des Kopplungsrings, der Ventilkörperscheibe und der Ventilsitzscheibe, erleichtert. Zugleich kann durch die Verbindung der beiden Teile eine gewünschte axiale Passung und Dichtungskraft bewirkt werden.

Dabei ist es insbesondere bevorzugt, wenn der Ventilgehäuseeinlassabschnitt mittels einer Schraubverbindung mit dem Ventilgehäuseauslassabschnitt verbunden ist und durch Anziehen der Schraubverbindung das Ventilsitzdichtungselement axial zwischen der Ventilsitzscheibe und dem Ventilgehäuse einspannbar ist. Durch diese Schraubverbindung und die entsprechende Einspannung des Ventilsitzdichtungselementes wird die notwendige Dichtungskraft zwischen Ventilsitzscheibe und Ventilgehäuse einerseits, darüber hinaus aber auch die notwendige Dichtungskraft zwischen Ventilkörperscheibe und Ventilsitzscheibe als Vorspannkraft erreicht und kann gegebenenfalls durch konstruktive Maßänderungen der Anschläge dieser Verschraubung oder durch das Anzugsmoment bei der Verschraubung eingestellt werden.

Eine bevorzugte Ausführungsform wird anhand der beiliegenden Figuren erläutert. Es zeigen:
- Fig. 1: eine Stirnansicht auf ein nicht erfindungsgemäßes Absperr- und Regelventil gemäß einer ersten Ausführungsform,
- Fig. 2: eine Seitenansicht des Absperr- und Regelventils gemäß Fig. 1,
- Fig. 3: einen Längsschnitt entlang der Linie A-A in Fig. 1 durch das Absperr- und Regelventil gemäß Fig. 1,
- Fig. 4: eine perspektivische Explosionsdarstellung des Absperr- und Regelventils gemäß Fig. 1,
- Fig. 5: eine Draufsicht auf ein nicht erfindungsgemäßes Absperr- und Regelventil gemäß einer zweiten Ausführungsform,
- Fig. 6: eine Seitenansicht des Absperr- und Regelventils gemäß Fig. 5,
- Fig. 7: einen Längsschnitt entlang der Linie A-A in Fig. 6 durch das Absperr- und Regelventil gemäß Fig. 5,
- Fig. 8: eine perspektivische Explosionsdarstellung des Absperr- und Regelventils gemäß Fig. 5,
- Fig. 9: einen Längsschnitt durch ein nicht erfindungsgemäßes Absperr- und Regelventil gemäß einer dritten Ausführungsform,
- Fig. 10: einen Längsschnitt durch ein Absperr- und Regelventil gemäß der Erfindung, und
- Fig. 11: eine perspektivische Explosionsdarstellung des Absperr- und Regelventils gemäß Fig. 10.

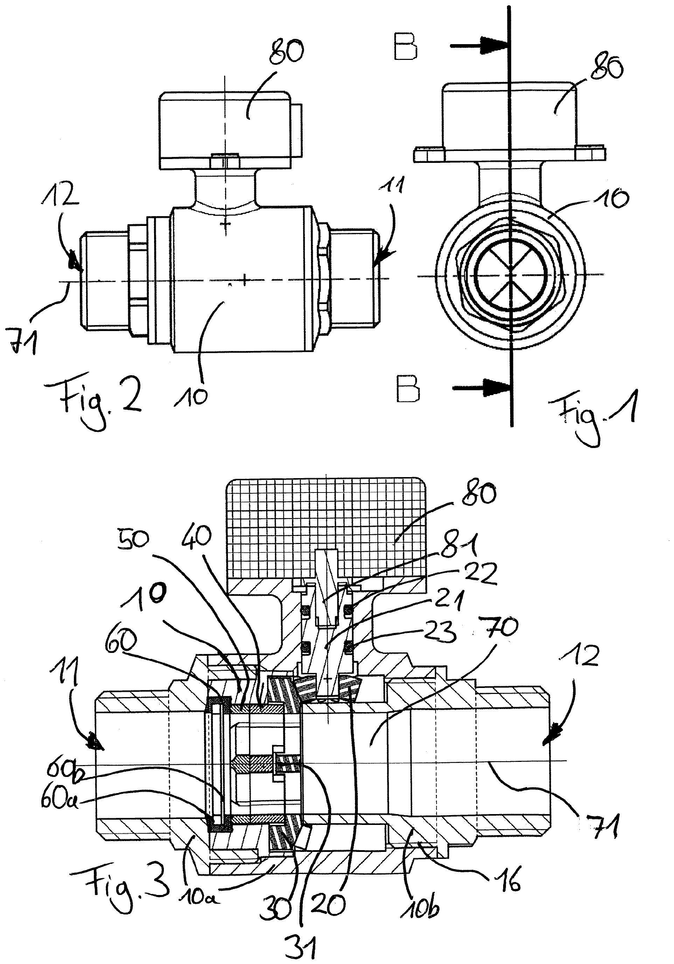

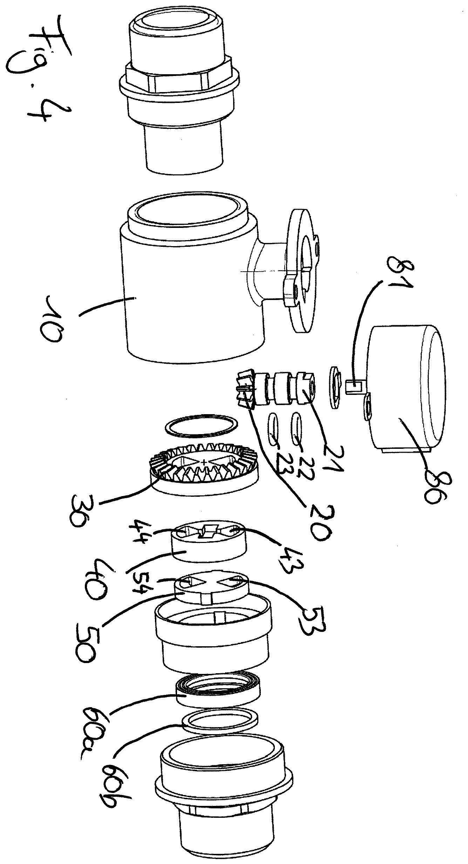

Bezug nehmend auf die Fig. 1 bis 4 weist eine erste Hustunrungsvariante des nicht erfindungsgemäßen Absperrventils ein Ventilgehäuse 10 mit einer Einlassöffnung 11 und einer Auslassöffnung 12 auf. Sowohl bei der Einlassöffnung wie auch bei der Auslassöffnung ist am Ventilgehäuse ein Außengewinde vorhanden, welches einen Anschluss des Absperrventils an Armaturen oder Rohre mittels entsprechender Fittings in abgedichteter und mechanisch belastbarer Weise ermöglicht. Alternativ können eines dieser Gewinde oder beide Gewinde durch ein Innengewinde oder ein Pressfitting ersetzt sein.

Die Einlassöffnung 11 und die Auslassöffnung 12 sind durch einen Durchtrittskanal 70, der sich entlang einer Längsachse 71 erstreckt, miteinander verbunden, durch den das Fluid das Ventil durchströmen kann. In dem Durchtrittskanal ist eine Ventilkörperscheibe 40 und eine Ventilsitzscheibe 50 angeordnet, welche in einer ersten Stellung zueinander den Durchfluss von der Einlass- zur Auslassöffnung freigeben und in einer zweiten, dazu um die Längsachse 71 verschwenkten Stellung sperren.

An der Ventilkörperscheibe 40 liegt auf der zur Einlassöffnung 11 weisenden Seite axial flächig die Ventilsitzscheibe 50 an. Zwischen Ventilkörperscheibe 40 und Ventilsitzscheibe 50 ist eine Abdichtung durch planes Anliegen der axialen Stirnflächen aufeinander bewirkt. Zwischen der Ventilkörperscheibe 40 und Ventilsitzscheibe 50 ist ein Gleitfett angeordnet. Sowohl die Ventilkörperscheibe als auch die Ventilsitzscheibe sind aus Aluminiumoxid oder Siliziumoxid gefertigt und ermöglichen einen verschleißfreien Betrieb mit einer zuverlässigen Aufrechterhaltung der Dichtungswirkung über diese axialen Stirnflächen.

Die Ventilsitzscheibe 50 ist formschlüssig mittels zweier radial vorstehender Vorsprünge am Außenumfang in dem Ventilgehäuse 10 gehalten. Sie kann sich hierdurch nicht relativ zum Ventilgehäuse um die Längsachse 71 drehen.

Die Ventilkörperscheibe weist weiterhin zwei im Querschnitt ca. tortenstückförmige Durchlassöffnungen 43, 44 auf, die sich über jeweils ca. 90° umfänglich erstrecken und um 180° versetzt einander gegenüberliegen. Die Ventilsitzscheibe 50 weist ebenfalls zwei tortenstückförmige Durchlassöffnungen 53, 54 auf, die sich über jeweils ca. 90° Umfangswinkel erstrecken und um 180° einander gegenüberliegend angeordnet sind. In der in den Figuren abgebildeten Stellung sind die Durchlassöffnungen 43, 44 in der Ventilkörperscheibe und die Durchlassöffnungen 53, 54 in der Ventilsitzscheibe fluchtend zueinander angeordnet, sodass das Absperrventil in der Offenstellung ist und den Durchtritt von Flüssigkeit von der Einlassöffnung zu der Auslassöffnung ermöglicht. Durch Verdrehen der Ventilkörperscheibe 40 um 90° können die Durchlassöffnungen 43, 44 in eine Stellung verdreht werden, in der sie gegenüber den undurchlässigen Abschnitten zwischen den Durchlassöffnungen 53, 54 der Ventilsitzscheibe 50 liegen und das Absperrventil hierdurch in die Geschlossenstellung gebracht wird.

Die Ventilsitzscheibe ist mittels eines Profildichtungselementes 60 gegen das Ventilgehäuse abgedichtet. Das Profildichtungselement 60 besteht aus einem im Querschnitt U-förmigen, mit seinen Schenkeln nach radial einwärts weisenden, elastomeren Element 60a, welches durch einen Stützring 60b, der zwischen den Schenkeln angeordnet ist und eine höhere Steifigkeit als das elastomere Element aufweist, in Form gehalten wird.

Das Profildichtungselement ist zwischen einem ersten Gehäuseteil 10a, an dem die Einlassöffnung 11 ausgebildet ist, und einem zweiten Gehäuseteil 10b, an dem die Auslassöffnung ausgebildet ist, axial eingeklemmt. Das Gehäuseteil 10a ist mit dem Gehäuseteil 10b mittels einer Gewindeverbindung 16 verschraubt. Die Gewindeverbindung 16 ist koaxial zur Längsachse 71 des Durchgangskanals angeordnet. Durch Verschraubung des Gehäuseteils 10a mit dem Gehäuseteil 10b wird das elastomere Profildichtungselement axial gequetscht und hierdurch eine zuverlässige Dichtungswirkung erzielt.

Die Ventilkörperscheibe 40 ist an ihrem zur Auslassöffnung weisenden Ende formschlüssig mit einem Zahnkranz 30 verbunden. Dieser Formschluss wird durch einen im Querschnitt rechteckigen Vorsprung 31 am Zahnkranz 30, der zentral durch eine rechteckige Öffnung in der Ventilkörperscheibe 40 ragt, bewirkt.

Der Zahnkranz 30 steht im Eingriff mit einem Zahnradritzel 20. Zahnradritzel 20 und Zahnkranz 30 bilden ein Kegelradgetriebe, dessen Rotationsachsen im rechten Winkel zueinander stehen. Das Zahnradritzel ist drehmomentfest mit einer Betätigungswelle 21 verbunden, die sich in radialer Richtung in Bezug auf die Längsachse 71 des Strömungskanals 70 durch eine Öffnung im Ventilgehäuse 10 erstreckt.

Die Betätigungswelle ist drehmomentfest mit der Ausgangswelle 81 eines Steppermotors 80 verbunden. Das Zahnradritzel hat eine geringere Zähnezahl als der Zahnkranz 30 und bewirkt dadurch eine Drehzahluntersetzung der Rotationsbewegung der Abtriebswelle 81 des Steppermotors 80.

Mittels des formschlüssigen Kopplungsverbundes des Zahnkranzes 30 mit der Ventilkörperscheibe 40 kann ein von dem Zahnradritzel 20 auf den Zahnkranz 30 übertragenes Drehmoment auf die Ventilkörperscheibe 40 übertragen werden und folglich eine Verschwenkung der Ventilkörperscheibe um 90° mittels des Zahnradritzel 20 bewirkt werden.

Diese Verschwenkbewegung findet um die gemeinsame Schwenkachse 71 statt, die der Längsachse eines Durchtrittskanals 70 im Gehäuse 10 entspricht.

Die Betätigungswelle 21 ist mittels eines ersten O-Rings 22 und eines zweiten O-Rings 23 gegen das Ventilgehäuse abgedichtet. Die O-Ringe 22, 23 sind in umfänglichen Nuten in der Außenumfangsfläche der Betätigungswelle 21 eingesetzt und werden radial zwischen dem Ventilgehäuse 10 und der Betätigungswelle 21 eingeklemmt. Hierdurch wird die Dichtungskraft der O-Ringe 22, 23 bewirkt. Die O-Ringe 22, 23 sind axial voneinander beabstandet. Hierdurch wird ein Austritt von Wasser aus dem Durchlasskanal 101 des Ventilgehäuses 10 durch die Bohrung, in der die Betätigungswelle 21 drehbar gelagert ist, zuverlässig verhindert. Zwischen den beiden O-Ringen 22, 23 kann ein Schmiermitteldepot angeordnet sein, in dem ein die Reibung der O-Ringe 22, 23 herabsetzendes Schmiermittel, beispielsweise ein Fett, angeordnet ist.

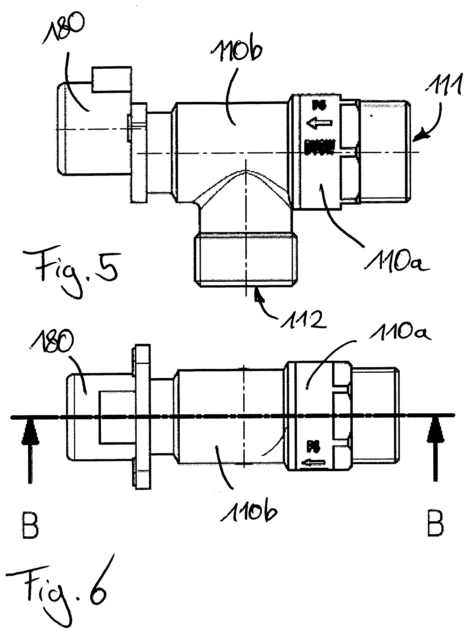

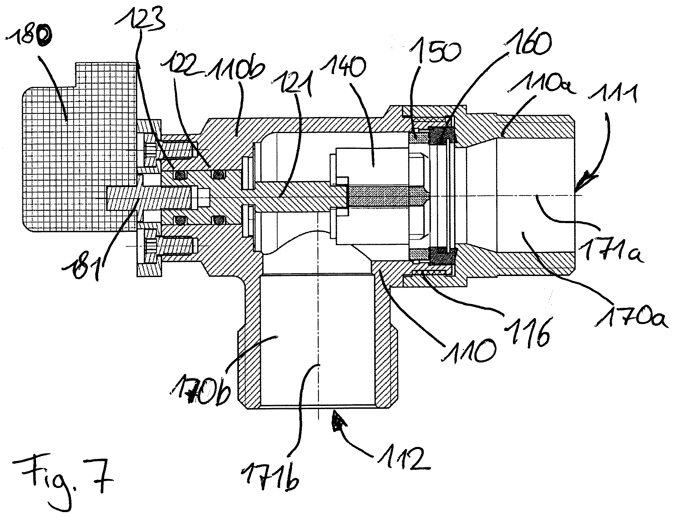

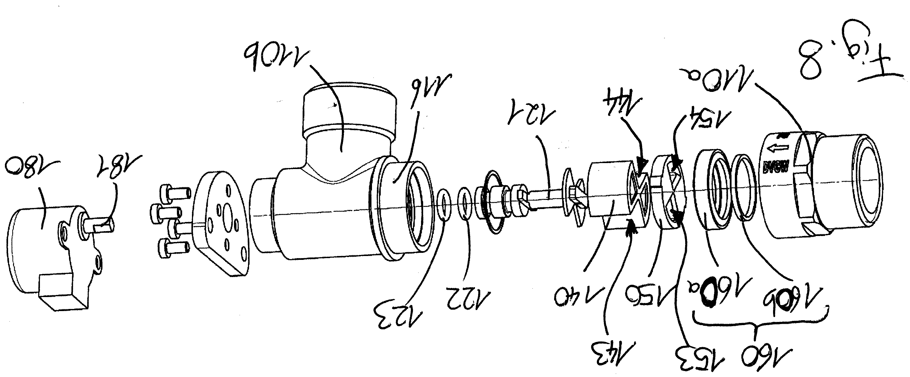

Bezug nehmend auf die Fig. 5 bis 8 weist eine zweite Ausführungsvariante des nicht erfindungsgemäßen Absperrventils ein Ventilgehäuse 110 mit einer Einlassöffnung 111 und einer Auslassöffnung 112 auf. Sowohl bei der Einlassöffnung wie auch bei der Auslassöffnung ist am Ventilgehäuse ein Außengewinde vorhanden, welches einen Anschluss des Absperrventils an Armaturen oder Rohre mittels entsprechender Fittings in abgedichteter und mechanisch belastbarer Weise ermöglicht. Alternativ können eines dieser Gewinde oder beide Gewinde durch ein Innengewinde oder ein Pressfitting ersetzt sein.

Die Einlassöffnung 111 und die Auslassöffnung 112 sind durch einen Durchtrittskanal 171a, b miteinander verbunden, durch den das Fluid das Ventil durchströmen kann. Der Durchtrittskanal 171a, b weist einen einlassseitigen Durchtrittskanalabschnitt 171a, der sich entlang einer ersten Längsachse 170a erstreckt, und einen auslassseitigen Durchtrittskanalabschnitt 171b, der sich entlang einer zweiten Längsachse 170b erstreckt, auf. Die erste und zweite Längsachse stehen in einem rechten Winkel zueinander.

In dem einlassseitigen Durchtrittskanalabschnitt 171a ist eine Ventilkörperscheibe 140 und eine Ventilsitzscheibe 150 angeordnet, welche in einer ersten Stellung zueinander den Durchfluss von der Einlass- zur Auslassöffnung freigeben und in einer zweiten, dazu um die Längsachse 171a verschwenkten Stellung sperren.

An der Ventilkörperscheibe 140 liegt auf der zur Einlassöffnung 111 weisenden Seite axial flächig die Ventilsitzscheibe 150 an. Zwischen Ventilkörperscheibe 140 und Ventilsitzscheibe 150 ist eine Abdichtung durch planes Anliegen der axialen Stirnflächen aufeinander bewirkt. Zwischen der Ventilkörperscheibe 140 und Ventilsitzscheibe 150 ist ein Gleitfett angeordnet. Sowohl die Ventilkörperscheibe als auch die Ventilsitzscheibe sind aus Aluminiumoxid oder Siliziumoxid gefertigt und ermöglichen einen verschleißfreien Betrieb mit einer zuverlässigen Aufrechterhaltung der Dichtungswirkung über diese axialen Stirnflächen.

Die Ventilsitzscheibe 150 ist formschlüssig mittels zweier radial vorstehender Vorsprünge am Außenumfang in dem Ventilgehäuse 110 gehalten. Sie kann sich hierdurch nicht relativ zum Ventilgehäuse um die Längsachse 171a drehen.

Die Ventilkörperscheibe weist weiterhin zwei im Querschnitt ca. tortenstückförmige Durchlassöffnungen 143, 144 auf, die sich über jeweils ca. 90° umfänglich erstrecken und um 180° versetzt einander gegenüberliegen. Die Ventilsitzscheibe 150 weist ebenfalls zwei tortenstückförmige Durchlassöffnungen 153, 154 auf, die sich über jeweils ca. 90° Umfangswinkel erstrecken und um 180° einander gegenüberliegend angeordnet sind. In der in den Figuren abgebildeten Stellung sind die Durchlassöffnungen 143, 144 in der Ventilkörperscheibe und die Durchlassöffnungen 153, 154 in der Ventilsitzscheibe fluchtend zueinander angeordnet, sodass das Absperrventil in der Offenstellung ist und den Durchtritt von Flüssigkeit von der Einlassöffnung zu der Auslassöffnung ermöglicht. Durch Verdrehen der Ventilkörperscheibe 140 um 90° können die Durchlassöffnungen 143, 144 in eine Stellung verdreht werden, in der sie gegenüber den undurchlässigen Abschnitten zwischen den Durchlassöffnungen 153, 154 der Ventilsitzscheibe 150 liegen und das Absperrventil hierdurch in die Geschlossenstellung gebracht wird.

Die Ventilsitzscheibe ist mittels eines Profildichtungselementes 160 gegen das Ventilgehäuse abgedichtet. Das Profildichtungselement 160 besteht aus einem im Querschnitt U-förmigen, mit seinen Schenkeln nach radial einwärts weisenden, elastomeren Element 160a, welches durch einen Stützring 160b, der zwischen den Schenkeln angeordnet ist und eine höhere Steifigkeit als das elastomere Element aufweist, in Form gehalten wird.

Das Profildichtungselement ist zwischen einem ersten Gehäuseteil 110a, an dem die Einlassöffnung 111 ausgebildet ist, und einem zweiten Gehäuseteil 110b, an dem die Auslassöffnung ausgebildet ist, axial eingeklemmt. Das Gehäuseteil 110a ist mit dem Gehäuseteil 110b mittels einer Gewindeverbindung 116 verschraubt. Die Gewindeverbindung 16 ist koaxial zur Längsachse 171a des Durchgangskanals 170a angeordnet. Durch Verschraubung des Gehäuseteils 110a mit dem Gehäuseteil 110b wird das elastomere Profildichtungselement 160 axial gequetscht und hierdurch eine zuverlässige Dichtungswirkung erzielt.

Die Ventilkörperscheibe 140 ist an ihrem stromabwärts weisenden Ende formschlüssig mit einem Betätigungswelle 121 verbunden. Die Betätigungswelle 21 erstreckt sich in koaxialer Richtung in Bezug auf die Längsachse 171a des Strömungskanalabschnitts 170a durch eine Öffnung im Ventilgehäuse 110.

Die Betätigungswelle 121 ist drehmomentfest mit der Ausgangswelle 181 eines Steppermotors 180 verbunden. Mittels des formschlüssigen Kopplungsverbundes der Betätigungswelle 121 mit der Ventilkörperscheibe 40 kann eine von der Ausgangswelle 181 auf die Betätigungswelle 121 übertragenes Drehmoment auf die Ventilkörperscheibe 140 übertragen werden und folglich eine Verschwenkung der Ventilkörperscheibe um 90° mittels der Betätigungswelle 121 bewirkt werden. Diese Verschwenkbewegung findet um die gemeinsame Schwenkachse 171a statt, die der Längsachse des Durchtrittskanalabschnitts 170a im Gehäuse 110 entspricht.

Die Betätigungswelle 121 ist mittels eines ersten O-Rings 122 und eines zweiten O-Rings 123 gegen das Ventilgehäuse 110 abgedichtet. Die O-Ringe 122, 123 sind in umfänglichen Nuten in der Außenumfangsfläche der Betätigungswelle 121 eingesetzt und werden radial zwischen dem Ventilgehäuse 110 und der Betätigungswelle 121 eingeklemmt. Hierdurch wird die Dichtungskraft der O-Ringe 122, 123 bewirkt. Die O-Ringe 122, 123 sind axial voneinander beabstandet. Hierdurch wird ein Austritt von Wasser aus dem Durchlasskanal 170a,b des Ventilgehäuses 110 durch die Bohrung, in der die Betätigungswelle 121 drehbar gelagert ist, zuverlässig verhindert. Zwischen den beiden O-Ringen 122, 123 kann ein Schmiermitteldepot angeordnet sein, in dem ein die Reibung der O-Ringe 122, 123 herabsetzendes Schmiermittel, beispielsweise ein Fett, angeordnet ist.

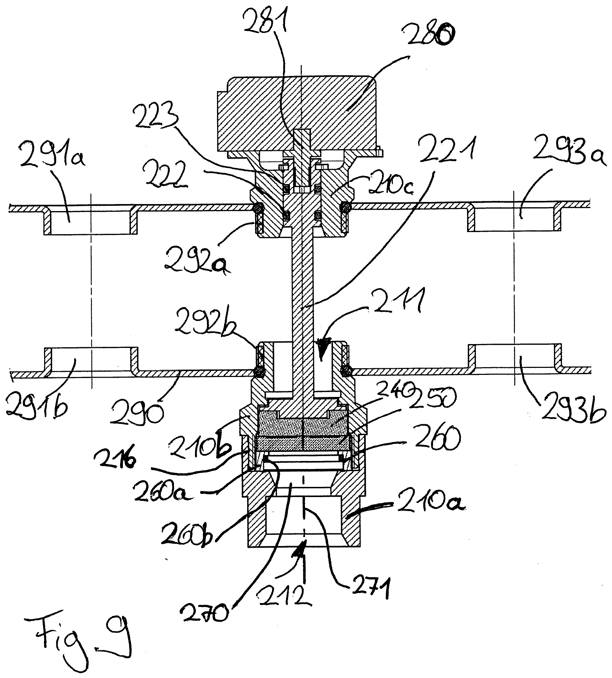

Bezug nehmend auf die Fig. 9 weist eine dritte Austuhrungsvariante des nicht ertindungsgemäßen Absperrventils ein dreiteiliges Ventilgehäuse 210a-c mit einer Einlassöffnung 211 und einer Auslassöffnung 212 auf. Die Einlassöffnung 212 ist an einem ersten Gehäuseabschnitt 210a ausgebildet, der mit einem zweiten Gehäuseabschnitt 210b mittels eines Gewindes 216 direkt verschraubt ist. An dem zweiten Gehäuseabschnitt 210b ist die Einlassöffnung 211 ausgebildet.

Der dritte Gehäuseabschnitt 210c ist beabstandet zu dem ersten und zweiten Gehäuseabschnitt 210a, b angeordnet.

Sowohl bei der Einlassöffnung 211 wie auch bei der Auslassöffnung 212 ist am Ventilgehäuse 210a,b ein Außengewinde vorhanden. Mittels des Auslassgewindes im Bereich der Einlassöffnung 211 ist der Gehäuseabschnitt 210b in einer radialen Gewindebohrung 292b eines Verteilerrohres 290 von radial außen eingeschraubt. Der dritte Gehäuseabschnitt 210c ist mittels eines daran ausgebildeten Außengewindes in einer radialen Gewindebohrung 292a des Verteilerrohres 290 von radial außen eingeschraubt. Die radiale Gewindebohrung 292a liegt radial gegenüber der radialen Gewindebohrung 292b.

An dem Verteilerrohr 290 sind weitere Gewindebohrungspaarungen 291a, b und 292a,b vorhanden, die das Einsetzen von weiteren Sperrventilen ermöglichen.

Die Einlassöffnung 211 und die Auslassöffnung 212 sind durch einen Durchtrittskanal 270 miteinander verbunden, durch den das Fluid das Ventil durchströmen kann. In dem Durchtrittskanal 270 ist eine Ventilkörperscheibe 240 und eine Ventilsitzscheibe 250 angeordnet, welche in einer ersten Stellung zueinander den Durchfluss von der Einlasszur Auslassöffnung freigeben und in einer zweiten, dazu um die Längsachse 271 verschwenkten Stellung sperren.

An der Ventilkörperscheibe 240 liegt auf der zur Einlassöffnung 211 weisenden Seite axial flächig die Ventilsitzscheibe 250 an. Zwischen Ventilkörperscheibe 240 und Ventilsitzscheibe 250 ist eine Abdichtung durch planes Anliegen der axialen Stirnflächen aufeinander bewirkt. Zwischen der Ventilkörperscheibe 240 und Ventilsitzscheibe 250 ist ein Gleitfett angeordnet. Sowohl die Ventilkörperscheibe als auch die Ventilsitzscheibe sind aus Aluminiumoxid oder Siliziumoxid gefertigt und ermöglichen einen verschleißfreien Betrieb mit einer zuverlässigen Aufrechterhaltung der Dichtungswirkung über diese axialen Stirnflächen.

Die Ventilsitzscheibe 250 ist formschlüssig mittels zweier radial vorstehender Vorsprünge am Außenumfang in dem Ventilgehäuse 210b gehalten. Sie kann sich hierdurch nicht relativ zum Ventilgehäuse um die Längsachse 271 drehen.

Die Ventilkörperscheibe weist weiterhin zwei im Querschnitt ca. tortenstückförmige Durchlassöffnungen auf, die sich über jeweils ca. 90° umfänglich erstrecken und um 180° versetzt einander gegenüberliegen. Die Ventilsitzscheibe 250 weist ebenfalls zwei tortenstückförmige Durchlassöffnungen auf, die sich über jeweils circa 90° Umfangswinkel erstrecken und um 180° einander gegenüberliegend angeordnet sind. In der in den Figuren abgebildeten Stellung sind die Durchlassöffnungen in der Ventilkörperscheibe und die Durchlassöffnungen in der Ventilsitzscheibe fluchtend zueinander angeordnet, sodass das Absperrventil in der Offenstellung ist und den Durchtritt von Flüssigkeit von der Einlassöffnung zu der Auslassöffnung ermöglicht. Durch Verdrehen der Ventilkörperscheibe 240 um 90° können die Durchlassöffnungen in eine Stellung verdreht werden, in der sie gegenüber den undurchlässigen Abschnitten zwischen den Durchlassöffnungen der Ventilsitzscheibe 250 liegen und das Absperrventil hierdurch in die Geschlossenstellung gebracht wird.

Die Ventilsitzscheibe ist mittels eines Profildichtungselementes 260 gegen das Ventilgehäuse abgedichtet. Das Profildichtungselement 260 besteht aus einem im Querschnitt U-förmigen, mit seinen Schenkeln nach radial einwärts weisenden, elastomeren Element 260a, welches durch einen Stützring 260b, der zwischen den Schenkeln angeordnet ist und eine höhere Steifigkeit als das elastomere Element aufweist, in Form gehalten wird.

Das Profildichtungselement ist zwischen dem ersten Gehäuseteil 210a, an dem die Auslassöffnung 212 ausgebildet ist, und dem zweiten Gehäuseteil 210b, an dem die Einlassöffnung 211 ausgebildet ist, axial eingeklemmt. Die Gewindeverbindung 216 ist koaxial zur Längsachse 271 des Durchgangskanals 270 angeordnet. Durch Verschraubung des Gehäuseteils 210a mit dem Gehäuseteil 210b wird das elastomere Profildichtungselement 260 axial gequetscht und hierdurch eine zuverlässige Dichtungswirkung erzielt.

Die Ventilkörperscheibe 240 ist an ihrem stromaufwärts weisenden Ende formschlüssig mit einem Betätigungswelle 221 verbunden. Die Betätigungswelle 221 erstreckt sich in koaxialer Richtung in Bezug auf die Längsachse 271 des Strömungskanalabschnitts 270 durch die Einlassöffnung im Ventilgehäuse 210b, verläuft radial in Bezug auf die Längsachse des Verteilerrohres 290 durch das Verteilerrohr und erstreckt sich bis in den dritten Gehäuseabschnitt 210c.

Die Betätigungswelle 221 ist innerhalb des dritten Gehäuseabschnitts 210c drehmomentfest mit der Ausgangswelle 281 eines Steppermotors 280 verbunden. Mittels des formschlüssigen Kopplungsverbundes der Betätigungswelle 221 mit der Ventilkörperscheibe 240 kann ein von der Ausgangswelle 281 auf die Betätigungswelle 221 übertragenes Drehmoment auf die Ventilkörperscheibe 240 übertragen werden und folglich eine Verschwenkung der Ventilkörperscheibe um 90° mittels der Betätigungswelle 221 bewirkt werden. Diese Verschwenkbewegung findet um die gemeinsame Schwenkachse 271 statt, die der Längsachse des Durchtrittskanalabschnitts 270 im Gehäuseabschnitt 210a,b entspricht.

Die Betätigungswelle 221 ist mittels eines ersten O-Rings 222 und eines zweiten O-Rings 223 gegen das Ventilgehäuse abgedichtet. Die O-Ringe 222, 223 sind in umfänglichen Nuten in der Außenumfangsfläche der Betätigungswelle 221 eingesetzt und werden radial zwischen dem Ventilgehäuseabschnitt 210c und der Betätigungswelle 221 eingeklemmt. Hierdurch wird die Dichtungskraft der O-Ringe 222, 223 bewirkt. Die O-Ringe 222, 223 sind axial voneinander beabstandet. Hierdurch wird ein Austritt von Wasser aus dem Ventilgehäuse 210c durch die Bohrung, in der die Betätigungswelle 221 drehbar gelagert ist, zuverlässig verhindert. Zwischen den beiden O-Ringen 222, 223 kann ein Schmiermitteldepot angeordnet sein, in dem ein die Reibung der O-Ringe 222, 223 herabsetzendes Schmiermittel, beispielsweise ein Fett, angeordnet ist.

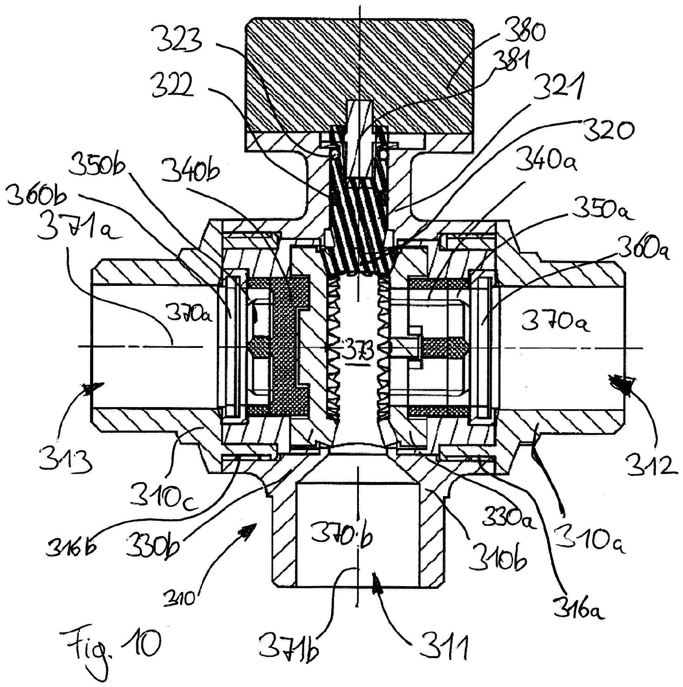

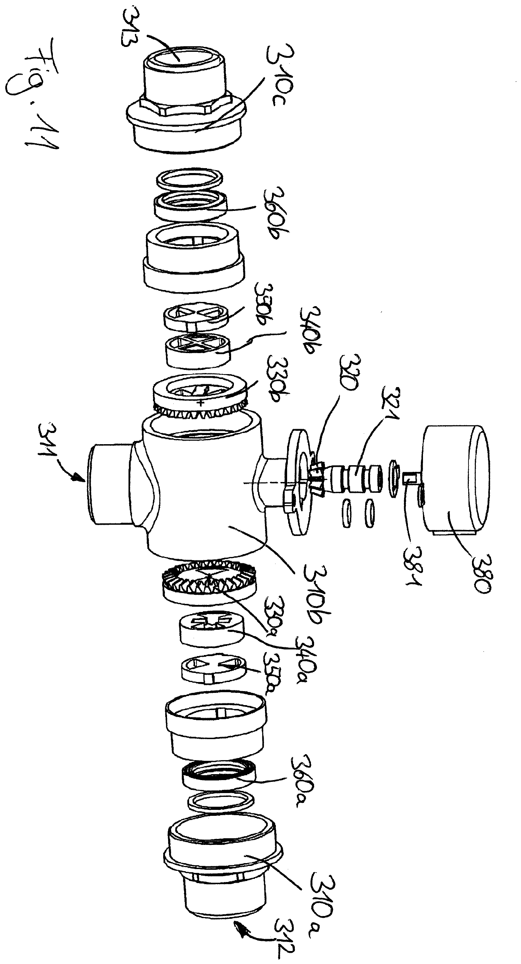

Bezug nehmend auf die Fig. 10 und 11 weist das erfindungsgemäße Absperr- und Regelventil ein Ventilgehäuse 310 mit drei Ein- oder Auslassöffnungen 311-313 auf. Diese drei Ein- oder Auslassöffnungen können grundsätzlich eine Einlassöffnung 311 und zwei Auslassöffnungen 312, 313 oder eine Auslassöffnung 311 und zwei Einlassöffnungen 312, 313 bilden. Bei allen Einlass- und Auslassöffnung ist am Ventilgehäuse ein Außengewinde vorhanden, welches einen Anschluss des Ventils an Armaturen oder Rohre mittels entsprechender Fittings in abgedichteter und mechanisch belastbarer Weise ermöglicht. Alternativ können eines dieser Gewinde oder beide Gewinde durch ein Innengewinde oder ein Pressfitting ersetzt sein.

Die Ein- oder Auslassöffnungen 311-313 sind durch einen ersten und einen zweiten Durchtrittskanäle 370a, b, die sich entlang zweier T- förmig zueinander stehender Längsachsen 370a, b erstrecken, miteinander verbunden, durch die das Fluid das Ventil durchströmen kann. Die Durchtrittskanäle 370a,b treffen in einem Verbindungspunkt 373 zusammen.

In dem ersten Durchtrittskanal 370a ist auf der einen Seite des Verbindungspunktes 373 zum Durchtrittskanal 370b eine erste Ventilkörperscheibe 340a und eine erste Ventilsitzscheibe 350a angeordnet, welche in einer ersten Stellung zueinander den Durchfluss von der Einlass-/Auslassöffnung 311 zu der Einlass-/Auslassöffnung 312 freigeben und in einer zweiten, dazu um die Längsachse 371a verschwenkten Stellung sperren.

In dem ersten Durchtrittskanal 370a ist auf der anderen Seite des Verbindungspunktes 373 zum Durchtrittskanal 370b eine zweite Ventilkörperscheibe 340b und eine zweite Ventilsitzscheibe 350b angeordnet, welche in einer ersten Stellung zueinander den Durchfluss von der Einlass-/Auslassöffnung 311 zu der Einlass-/Auslassöffnung 313 freigeben und in einer zweiten, dazu um die Längsachse 371a verschwenkten Stellung sperren.

An der jeweiligen Ventilkörperscheibe 340a,b liegt auf der zur Einlass-/Auslassöffnung 312/313 weisenden Seite axial flächig die jeweilige Ventilsitzscheibe 350a,b an. Zwischen Ventilkörperscheibe 340a,b und Ventilsitzscheibe 350a,b ist eine Abdichtung durch planes Anliegen der axialen Stirnflächen aufeinander bewirkt. Zwischen der Ventilkörperscheibe und Ventilsitzscheibe ist ein Gleitfett angeordnet. Sowohl die Ventilkörperscheibe als auch die Ventilsitzscheibe sind aus Aluminiumoxid oder Siliziumoxid gefertigt und ermöglichen einen verschleißfreien Betrieb mit einer zuverlässigen Aufrechterhaltung der Dichtungswirkung über diese axialen Stirnflächen.

Jede Ventilsitzscheibe ist formschlüssig mittels zweier radial vorstehender Vorsprünge am Außenumfang in dem Ventilgehäuse 310 gehalten. Sie kann sich hierdurch nicht relativ zum Ventilgehäuse um die Längsachse 371a drehen.

Jede Ventilkörperscheibe weist weiterhin zwei im Querschnitt ca. tortenstückförmige Durchlassöffnungen auf, die sich über jeweils ca. 90° umfänglich erstrecken und um 180° versetzt einander gegenüberliegen. Jede Ventilsitzscheibe weist ebenfalls zwei tortenstückförmige Durchlassöffnungen auf, die sich über jeweils ca. 90° Umfangswinkel erstrecken und um 180° einander gegenüberliegend angeordnet sind.

In der in den Figuren abgebildeten Stellung sind die Durchlassöffnungen in der ersten Ventilkörperscheibe 340a und die Durchlassöffnungen in der ersten Ventilsitzscheibe 350a fluchtend zueinander angeordnet, sodass die erste Ventilanordnung in der Offenstellung ist und den Durchtritt von Flüssigkeit von der Einlass-/Auslassöffnung 311 zu der Einlass-/Auslassöffnung 312 ermöglicht. Die Durchlassöffnungen in der zweiten Ventilkörperscheibe 340b und die Durchlassöffnungen in der zweiten Ventilsitzscheibe 350b sind nicht fluchtend zueinander angeordnet, sodass die zweite Ventilanordnung in der Sperrstellung ist und den Durchtritt von Flüssigkeit von der Einlass-/Auslassöffnung 311 zu der Einlass-/Auslassöffnung 313 versperrt.

Jede Ventilsitzscheibe ist mittels eines Profildichtungselementes 360a,b gegen das Ventilgehäuse abgedichtet. Das Profildichtungselement besteht aus einem im Querschnitt U-förmigen, mit seinen Schenkeln nach radial einwärts weisenden, elastomeren Element, welches durch einen Stützring, der zwischen den Schenkeln angeordnet ist und eine höhere Steifigkeit als das elastomere Element aufweist, in Form gehalten wird.

Das Profildichtungselement 360a ist zwischen einem ersten Gehäuseteil 310a, an dem die Einlass-/Auslassöffnung 312 ausgebildet ist, und einem zweiten Gehäuseteil 310b, an dem die Einlass-/Auslassöffnung 311 ausgebildet ist, axial eingeklemmt. Das Profildichtungselement 360b ist zwischen einem dritten Gehäuseteil 310c, an dem die Einlass-/Auslassöffnung 313 ausgebildet ist, und dem zweiten Gehäuseteil 310b axial eingeklemmt. Die Gehäuseteile 310a,c sind mit dem Gehäuseteil 310b mittels jeweils einer Gewindeverbindung 316a,b verschraubt. Die Gewindeverbindungen 316a,b sind koaxial zur Längsachse 371a des Durchgangskanals 370a angeordnet.

Die erste Ventilkörperscheibe 340a ist an ihrem zum Verbindungspunkt 373 weisenden Ende formschlüssig mit einem Zahnkranz 330a verbunden. Dieser Formschluss wird durch einen im Querschnitt rechteckigen Vorsprung am Zahnkranz, der sich zentral durch eine rechteckige Öffnung in der Ventilkörperscheibe 340a erstreckt, bewirkt. Die zweite Ventilkörperscheibe 340b ist an ihrem zum Verbindungspunkt 373 weisenden Ende formschlüssig mit einem Zahnkranz 330b verbunden. Dieser Formschluss wird durch einen im Querschnitt rechteckigen Stift, der sich zentral durch rechteckige Öffnungen in dem Zahnkranz 330b und der Ventilkörperscheibe 340b erstreckt, bewirkt.

Sowohl der Zahnkranz 330a als auch der Zahnkranz 330b stehen im Eingriff mit einem Zahnradritzel 320. Zahnradritzel 320 und die Zahnkranz 330a,b bilden zwei Kegelradgetriebe, deren Rotationsachsen jeweils im rechten Winkel zueinander stehen. Das Zahnradritzel ist drehmomentfest mit einer Betätigungswelle 321 verbunden, die sich in radialer Richtung in Bezug auf die Längsachse 371a des Strömungskanals 370a durch eine Öffnung im Ventilgehäuse 310a-c erstreckt.

Die Betätigungswelle 321 ist drehmomentfest mit der Ausgangswelle 381 eines Steppermotors 380 verbunden. Das Zahnradritzel hat eine geringere Zähnezahl als der Zahnkranz 330a,b und bewirkt dadurch eine Drehzahluntersetzung der Rotationsbewegung der Abtriebswelle 381 des Steppermotors 380.

Mittels des formschlüssigen Kopplungsverbundes des ersten Zahnkranzes 330a mit der ersten Ventilkörperscheibe 340a kann ein von dem Zahnradritzel 320 auf den ersten Zahnkranz 330a übertragenes Drehmoment auf die Ventilkörperscheibe 340a übertragen werden und folglich eine Verschwenkung der ersten Ventilkörperscheibe um 90° mittels des Zahnradritzel 320 bewirkt werden. Diese Verschwenkbewegung findet um die gemeinsame Schwenkachse 371a statt, die der Längsachse eines Durchtrittskanals 370a entspricht. Synchron zu dieser Verschwenkbewegung wird auch über den zweiten Zahnkranz 330b die zweite Ventilkörperscheibe 340b verschwenkt. Aus der in Figur 10 gezeigten Stellung führt daher die erste Ventilanordnung 340a, 350a eine Schließbewegung und die zweite Ventilanordnung 340b, 350b synchron dazu eine Öffnungsbewegung aus, wenn das Zahnradritzel 320 mittels des Steppermotors 380 gedreht wird.

Die Betätigungswelle 321 ist mittels eines ersten O-Rings 322 und eines zweiten O-Rings 323 gegen das Ventilgehäuse abgedichtet. Die O-Ringe 322, 323 sind in umfänglichen Nuten in der Außenumfangsfläche der Betätigungswelle 321 eingesetzt und werden radial zwischen dem Ventilgehäuse 310 und der Betätigungswelle 321 eingeklemmt. Hierdurch wird die Dichtungskraft der O-Ringe 322, 323 bewirkt. Die O-Ringe 322, 323 sind axial voneinander beabstandet. Hierdurch wird ein Austritt von Wasser aus dem Verbindungsbereich 373 des Ventilgehäuses 310 durch die Bohrung, in der die Betätigungswelle 321 drehbar gelagert ist, zuverlässig verhindert. Zwischen den beiden O-Ringen 322, 323 kann ein Schmiermitteldepot angeordnet sein, in dem ein die Reibung der O-Ringe 322, 323 herabsetzendes Schmiermittel, beispielsweise ein Fett, angeordnet ist.

## Patentansprüche

1. Ventil, umfassend:
- ein Ventilgehäuse (310) mit einer Einlassöffnung, einer Auslassöffnung und einem die Einlassöffnung mit der Auslassöffnung verbindenden Durchgangskanal,
- eine Ventilanordnung mit einer keramischen Ventilkörperscheibe (340a) mit zumindest einer Ventilkörperöffnung, die relativ zu einer keramischen Ventilsitzscheibe (350a) mit zumindest einer Ventilsitzöffnung beweglich ist und in einer ersten Relativposition der Ventilkörperscheibe zur Ventilsitzscheibe den Durchgangskanal sperrt und in einer zweiten Relativposition der Ventilkörperscheibe (340a) zur Ventilsitzscheibe (350a) den Durchgangskanal freigibt,
- eine zweite Ein- oder Auslassöffnung, von der sich ein zweiter Durchgangskanal erstreckt,
- eine zweite Ventilanordnung mit einer zweiten keramischen Ventilkörperscheibe (340b) mit zumindest einer Ventilkörperöffnung, die relativ zu einer zweiten keramischen Ventilsitzscheibe (350b) mit zumindest einer Ventilsitzöffnung beweglich ist und in einer ersten Relativposition der zweiten Ventilkörperscheibe (340b) zur zweiten Ventilsitzscheibe (350b) eine Fluidverbindung zwischen dem zweiten Durchgangskanal und dem Durchgangskanal sperrt und in einer zweiten Relativposition der zweiten Ventilkörperscheibe zur zweiten Ventilsitzscheibe die Fluidverbindung zwischen dem zweiten Durchgangskanal und dem Durchgangskanal freigibt,
wobei die Ventilkörperscheibe (340a) mit einem Zahnkranz (330a) mechanisch gekoppelt ist, der mit einem Zahnradritzel (320) zur Übertragung eines Drehmoments von dem Zahnradritzel auf den Zahnkranz und die Ventilkörperscheibe im Eingriff steht und der Zahnkranz (330a) innerhalb des Ventilgehäuses angeordnet ist und das Zahnradritzel (320) mit einem außerhalb des Ventilgehäuses angeordneten Betätigungselement mechanisch gekoppelt ist, wobei die Ventilkörperscheibe um eine Drehachse rotierbar gelagert ist, die parallel zu einer Längsachse des Durchgangskanals liegt, und
die zweite Ventilkörperscheibe (340b) mit einem zweiten Zahnkranz (330b) mechanisch gekoppelt ist, der mit dem Zahnradritzel (320) zur Übertragung eines Drehmoments von dem Zahnradritzel (320) auf den zweiten Zahnkranz (330b) und die zweite Ventilkörperscheibe im Eingriff steht und der zweite Zahnkranz innerhalb des Ventilgehäuses angeordnet ist,
**dadurch gekennzeichnet, dass** die Ein- oder Auslassöffnungen (311-313) durch einen ersten und einen zweiten Durchtrittskanäle (370a, b), die sich entlang zweier T- förmig zueinander stehender Längsachsen (371a, b) erstrecken, miteinander verbunden sind, durch die das Fluid das Ventil durchströmen kann, wobei die Durchtrittskanäle (370a,b) in einem Verbindungspunkt (373) zusammen treffen.

2. Ventil nach Anspruch 1,
**dadurch gekennzeichnet, dass** die zweite Ventilanordnung geschlossen ist, wenn die Ventilanordnung geöffnet ist und die zweite Ventilanordnung geöffnet ist, wenn die Ventilanordnung geschlossen ist.

3. Ventil nach einem der vorhergehenden Ansprüche,
**dadurch gekennzeichnet, dass** das Betätigungselement außen am Ventilgehäuse angeordnet und mit dem Zahnradritzel (320) mittels einer Ritzelwelle mechanisch verbunden ist zur Übertragung eines Drehmoments.

4. Ventil nach einem der vorhergehenden Ansprüche,
**dadurch gekennzeichnet, dass** das Zahnradritzel (320) innerhalb des Ventilgehäuses (310) angeordnet ist.

5. Ventil nach Anspruch 3 und 4,
**gekennzeichnet durch** eine Dichtung, welche die Ritzelwelle gegenüber dem Gehäuse abdichtet.

6. Ventil nach einem der vorhergehenden Ansprüche,
**dadurch gekennzeichnet, dass** das Ventilgehäuse (310) eine abgewinkelte Form hat, die Einlassöffnung eine Längsdurchströmungsrichtung hat, die abgewinkelt zu einer Längsdurchströmungsrichtung der Auslassöffnung steht und dass die Ventilkörperscheibe mit einer koaxial zur Längsdurchströmungsrichtung der Einlassöffnung oder der Auslassöffnung verlaufenden Stellwelle gekoppelt ist, die sich abgedichtet entlang der Längsdurchströmungsrichtung der Einlassöffnung oder der Auslassöffnung durch das Ventilgehäuse nach außen erstreckt und außerhalb des Ventilgehäuses mit einem Betätigungselement gekoppelt ist.

7. Ventil nach einem der vorhergehenden Ansprüche,
**dadurch gekennzeichnet, dass** die zumindest eine Ventilkörperöffnung und/oder die zumindest eine Ventilsitzöffnung eine dreieckige Kontur aufweisen.

8. Ventil nach einem der vorhergehenden Ansprüche,
**dadurch gekennzeichnet, dass** das Betätigungselement ein elektrischer Schrittmotor (380) ist.

9. Ventil nach einem der vorhergehenden Ansprüche,
**dadurch gekennzeichnet, dass** die Ventilkörperscheibe und die Ventilsitzscheibe je zwei um 180° zueinander versetzte axiale Öffnungen aufweisen und dass die Ventilkörperscheibe zwischen der ersten und der zweiten Relativposition um 90° verschwenkbar ist.

10. Ventil nach einem der vorhergehenden Ansprüche,
**dadurch gekennzeichnet, dass** die Ventilkörperscheibe um eine Drehachse rotierbar gelagert ist, die koaxial zu einer Längsachse des Durchgangskanals liegt.

11. Ventil nach einem der vorhergehenden Ansprüche,
**dadurch gekennzeichnet, dass** die Ventilsitzscheibe mittels eines Ventilsitzdichtungselementes gegen das Ventilgehäuse abgedichtet ist, wobei das Ventilsitzdichtungselement vorzugsweise axial zwischen der Ventilsitzscheibe und dem Ventilgehäuse eingespannt ist und weiter vorzugsweise ein Profildichtungselement aus einem elastomeren Material umfasst, das durch einen integrierten Stützring stabilisiert ist.

12. Ventil nach einem der vorhergehenden Ansprüche,
**dadurch gekennzeichnet, dass** das Ventilgehäuse einen Ventilgehäuseeinlassabschnitt und einen Ventilgehäuseauslassabschnitt umfasst, der lösbar mit dem Ventilgehäuseeinlassabschnitt verbunden ist.

13. Ventil nach Anspruch 12,
**dadurch gekennzeichnet, dass** der Ventilgehäuseeinlassabschnitt mittels einer Schraubverbindung mit dem Ventilgehäuseauslassabschnitt verbunden ist und durch Anziehen der Schraubverbindung das Ventilsitzdichtungselement axial zwischen der Ventilsitzscheibe und dem Ventilgehäuse einspannbar ist.

14. Ventil nach einem der vorhergehenden Ansprüche,
**dadurch gekennzeichnet, dass** ein Ventilgehäuseabschnitt, vorzugsweise das Ventilgehäuse, aus Messing, Rotguss, Edelstahl, Stahl oder Kunststoff gefertigt sind.

## Claims

1. Valve, comprehensive:
- a valve housing (310) having an inlet port, an outlet port, and a passageway connecting the inlet port to the outlet port,
- a valve assembly comprising a ceramic valve body disc (340a) having at least one valve body opening and being movable relative to a ceramic valve seat disc (350a) having at least one valve seat opening and blocking the through passage in a first relative position of the valve body disc to the valve seat disc and opening the through passage in a second relative position of the valve body disc (340a) to the valve seat disc (350a),
- a second inlet or outlet port from which a second passageway extends,
- a second valve assembly comprising a second ceramic valve body disc (340b) having at least one valve body opening, which is movable relative to a second ceramic valve seat disc (350b) having at least one valve seat opening and, in a first relative position of the valve body disc (340b) to the valve seat disc (350b), blocks fluid communication between the second through passage and the through passage and, in a second relative position of the valve body disc to the valve seat disc, opens fluid communication between the second through passage and the through passage,
wherein the valve body disc (340a) is mechanically coupled to a gear (330a) that engages a gear pinion (320) for transmitting torque from the gear pinion to the gear and the valve body disc, and the gear (330a) is disposed within the valve housing and the gear pinion (320) is mechanically coupled to an actuator disposed outside the valve housing, wherein the valve body disc is rotatably supported about an axis of rotation that is parallel to a longitudinal axis of the passageway, and
the second valve body disc (340b) is mechanically coupled to a second gear (330b) that is engaged with the gear pinion (320) for transmitting torque from the gear pinion (320) to the second gear (330b) and the valve body disc, and the second gear is disposed within the valve housing,
**characterized in that** the inlet or outlet ports (311-313) are interconnected by first and second passage channels (370a,b) extending along two longitudinal axes (371a,b) which are T-shaped relative to each other and through which the fluid can flow through the valve, the passage channels (370a,b) meeting at a connection point (373).

2. Valve according to claim 1,
**characterized in that** the second valve assembly is closed when the valve assembly is open and the second valve assembly is open when the valve assembly is closed.

3. Valve according to any one of the preceding claims,
**characterized in that** the actuator is arranged on the outside of the valve housing and is mechanically connected to the gear pinion (320) by means of a pinion shaft for transmitting a torque.

4. Valve according to any one of the preceding claims,
**characterized in that** the gear pinion (320) is located within the valve housing (310).

5. Valve according to claim 3 and 4,
**characterized by** a seal which seals the pinion shaft against the housing.

6. Valve according to any one of the preceding claims,
**characterized in that** the valve housing (310) has an angled shape, the inlet port has a longitudinal flow direction that is angled to a longitudinal flow direction of the outlet port, and **in that** the valve body disc is coupled to an actuator shaft that is coaxial with the longitudinal flow direction of the inlet port or the outlet port, the actuator shaft extending outwardly through the valve housing in a sealed manner along the longitudinal flow direction of the inlet port or the outlet port, and being coupled to an actuator member outside the valve housing.

7. Valve according to any of the preceding claims,
**characterized in that** the at least one valve body opening and/or the at least one valve seat opening have a triangular contour.

8. Valve according to any one of the preceding claims,
**characterized in that** the actuator is an electric stepper motor (380).

9. Valve according to any one of the preceding claims,
**characterized in that** the valve body disc and the valve seat disc each have two axial openings offset by 180° relative to one another, and **in that** the valve body disc can be pivoted through 90° between the first and second relative positions.

10. Valve according to any one of the preceding claims,
**characterized in that** the valve body disc is rotatably mounted about an axis of rotation that is coaxial with a longitudinal axis of the through passage,

11. Valve according to any one of the preceding claims,
**characterized in that** the valve seat disc is sealed against the valve housing by means of a valve seat sealing element, the valve seat sealing element preferably being clamped axially between the valve seat disc and the valve housing and further preferably comprising a profiled sealing element made of an elastomeric material which is stabilized by an integrated support ring.

12. Valve according to any one of the preceding claims,
**characterized in that** the valve housing comprises a valve housing inlet portion and a valve housing outlet portion detachably connected to the valve housing inlet portion.

13. Valve according to claim 12,
**characterized in that** the valve housing inlet portion is connected to the valve housing outlet portion by means of a screw connection, and by tightening the screw connection the valve seat sealing element can be clamped axially between the valve seat disc and the valve housing.

14. Valve according to any one of the preceding claims,
**characterized in that** a valve housing portion, preferably the valve housing, is made of brass, red bronze, stainless steel, steel or plastic.

## Revendications

1. Soupape comprenant :
- un boîtier de soupape (310) avec un orifice d'entrée, un orifice de sortie et un canal traversant reliant l'orifice d'entrée à l'orifice de sortie,
- un ensemble de soupape avec une rondelle de corps de soupape (340a) en céramique avec au moins un orifice de corps de soupape, qui est mobile par rapport à une rondelle de siège de soupape (350a) en céramique avec au moins un orifice de siège de soupape et qui bloque le canal traversant dans une première position relative de la rondelle de corps de soupape par rapport à la rondelle de siège de soupape et débloque le canal traversant dans une deuxième position relative de la rondelle de corps de soupape (340a) par rapport à la rondelle de siège de soupape (350a),
- un deuxième orifice d'entrée ou de sortie, duquel s'étend un deuxième canal traversant,
- un deuxième ensemble de soupape avec une deuxième rondelle de corps de soupape (340b) en céramique avec au moins un orifice de corps de soupape, qui est mobile par rapport à une deuxième rondelle de siège de soupape (350b) en céramique avec au moins un orifice de siège de soupape et bloque une liaison fluidique entre le deuxième canal traversant et le canal traversant dans une première position relative de la deuxième rondelle de corps de soupape (340b) par rapport à la deuxième rondelle de siège de soupape (350b) et débloque la liaison fluidique entre le deuxième canal traversant et le canal traversant dans une deuxième position relative de la deuxième rondelle de corps de soupape par rapport à la deuxième rondelle de siège de soupape,
dans laquelle la rondelle de corps de soupape (340a) est couplée mécaniquement à une couronne dentée (330a), qui est en prise avec un pignon de roue dentée (320) pour la transmission d'un couple de rotation depuis le pignon de roue dentée sur la couronne dentée et la rondelle de corps de soupape et la couronne dentée (330a) est disposée à l'intérieur du boîtier de soupape et le pignon de roue dentée (320) est couplé mécaniquement à un élément d'actionnement disposé à l'extérieur du boîtier de soupape, dans laquelle la rondelle de corps de soupape est montée de manière à pouvoir tourner autour d'un axe de rotation qui est parallèle à un axe longitudinal du canal traversant, et
la deuxième rondelle de corps de soupape (340b) est couplée mécaniquement à une deuxième couronne dentée (330b), qui est en prise avec le pignon de roue dentée (320) pour la transmission d'un couple de rotation depuis le pignon de roue dentée (320) sur la deuxième couronne dentée (330b) et la deuxième rondelle de corps de soupape et la deuxième couronne dentée est disposée à l'intérieur du boîtier de soupape,
**caractérisée en ce que** les orifices d'entrée ou de sortie (311 - 313) sont reliés les uns aux autres par un premier et un deuxième canal de passage (370a, b), qui s'étendent le long de deux axes longitudinaux (371a, b) situés l'un par rapport à l'autre en forme de T, par lesquels le fluide peut traverser la soupape, dans laquelle les canaux de passage (370a, b) se rencontrent en un point de liaison (373).

2. Soupape selon la revendication 1,
**caractérisée en ce que** le deuxième ensemble de soupape est fermé quand l'ensemble de soupape est ouvert et le deuxième ensemble de soupape est ouvert quand l'ensemble de soupape est fermé.

3. Soupape selon l'une quelconque des revendications précédentes,
**caractérisée en ce que** l'élément d'actionnement est disposé en dehors sur le boîtier de soupape et est relié mécaniquement au pignon de roue dentée (320) au moyen d'un arbre de pignon pour la transmission d'un couple de rotation.

4. Soupape selon l'une quelconque des revendications précédentes,
**caractérisée en ce que** le pignon de roue dentée (320) est disposé à l'intérieur du boîtier de soupape (310) .

5. Soupape selon la revendication 3 et 4,
**caractérisée par** un joint d'étanchéité, lequel étanchéifie l'arbre de pignon par rapport au boîtier.

6. Soupape selon l'une quelconque des revendications précédentes,
**caractérisée en ce que** le boîtier de soupape (310) a une forme coudée, l'orifice d'entrée a un sens d'écoulement longitudinal, qui est coudé par rapport à un sens d'écoulement longitudinal de l'orifice de sortie, et que la rondelle de corps de soupape est couplée à un arbre de réglage s'étendant de manière coaxiale par rapport au sens d'écoulement longitudinal de l'orifice d'entrée ou de l'orifice de sortie, qui s'étend de manière étanchéifiée vers l'extérieur le long du sens d'écoulement longitudinal de l'orifice d'entrée ou de l'orifice de sortie à travers le boîtier de soupape et est couplé à un élément d'actionnement à l'extérieur du boîtier de soupape.

7. Soupape selon l'une quelconque des revendications précédentes,
**caractérisée en ce que** l'au moins un orifice de corps de soupape et/ou l'au moins un orifice de siège de soupape présentent un contour triangulaire.

8. Soupape selon l'une quelconque des revendications précédentes,
**caractérisée en ce que** l'élément d'actionnement est un moteur pas à pas (380) électrique.

9. Soupape selon l'une quelconque des revendications précédentes,
**caractérisée en ce que** la rondelle de corps de soupape et la rondelle de siège de soupape présentent respectivement deux orifices axiaux décalés l'un par rapport à l'autre de 180°, et que la rondelle de corps de soupape peut être pivotée entre la première position relative et la deuxième position relative de 90°.

10. Soupape selon l'une quelconque des revendications précédentes,
**caractérisée en ce que** la rondelle de corps de soupape est montée de manière à pouvoir tourner autour d'un axe de rotation, qui est coaxial par rapport à un axe longitudinal du canal traversant.

11. Soupape selon l'une quelconque des revendications précédentes,
**caractérisée en ce que** la rondelle de siège de soupape est étanchéifiée par rapport au boîtier de soupape au moyen d'un élément d'étanchéité de siège de soupape, dans laquelle l'élément d'étanchéité de siège de soupape est enserré de préférence de manière axiale entre la rondelle de siège de soupape et le boîtier de soupape et comprend par ailleurs de préférence un élément d'étanchéité profilé composé d'un matériau élastomère, qui est stabilisé par une bague d'appui intégrée.

12. Soupape selon l'une quelconque des revendications précédentes,
**caractérisée en ce que** le boîtier de soupape comprend une section d'entrée de boîtier de soupape et une section de sortie de boîtier de soupape, qui est reliée de manière amovible à la section d'entrée de boîtier de soupape.

13. Soupape selon la revendication 12,
**caractérisée en ce que** la section d'entrée de boîtier de soupape est reliée à la section de sortie de boîtier de soupape au moyen d'une liaison par vissage et peut être enserrée axialement entre la rondelle de siège de soupape et le boîtier de soupape par serrage de la liaison par vissage de l'élément d'étanchéité de siège de soupape.

14. Soupape selon l'une quelconque des revendications précédentes,
**caractérisée en ce qu'**une section de boîtier de soupape, de préférence le boîtier de soupape, sont produits à partir de laiton, de bronze, d'acier inoxydable, d'acier ou de matière plastique.
